(19) Europäisches Patentamt
European Patent Office
Office européen des brevets

(11) **EP 1 882 715 A1**

(12) **EUROPEAN PATENT APPLICATION**
published in accordance with Art. 153(4) EPC

(43) Date of publication:
**30.01.2008 Bulletin 2008/05**

(51) Int Cl.:
*C08J 9/04* (2006.01)     *B32B 27/32* (2006.01)
*C08L 23/10* (2006.01)     *C08L 23/04* (2006.01)

(21) Application number: **06746281.2**

(22) Date of filing: **11.05.2006**

(86) International application number:
**PCT/JP2006/309472**

(87) International publication number:
**WO 2006/123569 (23.11.2006 Gazette 2006/47)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **18.05.2005 JP 2005145318**

(71) Applicant: **TORAY INDUSTRIES, INC.
Tokyo 103-8666 (JP)**

(72) Inventors:
• **NISHIMURA, Keisuke
5200842 (JP)**

• **OYAMA, Masahiko
Virginia 22602 (US)**
• **OKA, Yoshiyuki
Shiga 520-0842 (JP)**
• **AKIMARU, Fusayoshi
Shiga 520- 0846 (JP)**

(74) Representative: **Kador & Partner
Corneliusstrasse 15
80469 München (DE)**

(54) **CROSSLINKED POLYOLEFIN RESIN FOAM**

(57)    The present invention provides a crosslinked polyolefin resin foam which is excellent in heat resistance, and also can be secondarily processed into a complicated shape. The crosslinked polyolefin resin foam includes a polyolefin resin composition containing 20 to 50% by weight of a polypropylene-based resin (A) which shows at least one endothermic peak measured by differential scanning calorimeter at a temperature of 160°C or higher, 20 to 50% by weight of a polypropylene-based resin (B) which shows an endothermic peak measured by differential scanning calorimeter at a temperature of lower than 160°C, and 20 to 40% by weight of a polyethylene-based resin (c), and can be obtained by forming the polyolefin resin composition into an optional form and foaming and crosslinking the resin.

EP 1 882 715 A1

**Description**

TECHNICAL FIELD

The present invention relates to a crosslinked polyolefin resin foam which is excellent in heat resistance and also can be secondarily processed into a complicated shape through vacuum forming or compression forming.

BACKGROUND ART

Crosslinked polyolefin resin foams are commonly excellent in flexibility, lightweight properties and heat insulating properties and have conventionally been used as automobile interior materials such as ceilings, doors and instrument panels. These automobile interior materials are usually obtained by secondarily processing a sheet-like crosslinked polyolefin resin foam into a predetermined shape through vacuum forming or compression forming. Also, the crosslinked polyolefin resin foam is usually used as a laminate obtained by laminating sheets made of a polyvinyl chloride resin, sheets made of a thermoplastic elastomer, or skin materials (other materials) such as natural cloth-like articles or artificial cloth-like articles and leathers to each other.

In vacuum forming, or compression forming such as stamping of the crosslinked polyolefin resin foam, it has recently required that a processing temperature is adjusted to high temperature conditions within a range from 120 to 200°C so as to improve productivity, and deep draw forming is conducted so as to form into a complicated shape. Therefore, it is required for the crosslinked polyolefin resin foam to be excellent in formability at high temperature.

As a method for solving the above problems, there is proposed a method in which heat resistance is improved by increasing a melting point of a resin (see patent document 1). However, in this proposal, elongation sometimes becomes insufficient to cause breakage at an extremely projected portion in a formed article, a vertical wall portion where a flow rate of a resin serving as an aggregate increases in case of stamping, and a portion to which a high shear force is applied, such as a graining portion.

Patent Document 1: Patent Japanese Patent No. 3,308,724

DISCLOSURE OF THE INVENTION

Probrems to be solved by the Invention

In light of the background of the prior art, an object of the present invention is to provide a crosslinked polyolefin resin foam which is excellent in heat resistance and formability at high temperature, and also can be secondarily processed into a complicated shape.

Means for Solving the Problems

The present invention employs the following means so as to achieve the above object.

That is, the crosslinked polyolefin resin foam of the present invention is a crosslinked polyolefin resin foam including a polyolefin resin composition containing 20 to 50% by weight of a polypropylene-based resin (A) which shows at least one endothermic peak measured by differential scanning calorimeter at a temperature of 160°C or higher, 20 to 50% by weight of a polypropylene-based resin (B) which shows an endothermic peak measured by differential scanning calorimeter at a temperature of lower than 160°C, and 20 to 40% by weight of a polyethylene-based resin (c).

According to a preferred aspect of the crosslinked polyolefin resin foam of the present invention, the polypropylene-based resin (A) is preferably at least one kind of a resin selected from the group consisting of an ethylene-propylene block copolymer, a homopolypropylene and an ethylene-propylene random copolymer.

According to a preferred aspect of the crosslinked polyolefin resin foam of the present invention, a melt flow rate (occasionally abbreviated as MFR) of the polypropylene-based resin (A) is within a range from 0.4 to 1.8 g/10 min and a weight ratio of the polypropylene-based resin (A) to the polypropylene-based resin (B) is within a range from 1: 0.5 to 1:1.5.

The crosslinked polyolefin resin foam of the present invention can be laminated with other material (s) such as a skin material to form a laminate.

The crosslinked polyolefin resin foam of the present invention and the laminate can be formed into an optional shape to form a formed article.

The crosslinked polyolefin resin foam of the present invention, the laminate or the formed article can be preferably used as an automobile interior material.

Effects of the Invention

According to the present invention, it is possible to obtain a crosslinked polyolefin resin foam which can be formed into a complicated shape without causing forming defects and is excellent in heat resistance and formability at high temperature, and also reconcile formability and heat resistance in good balance, particularly a crosslinked polyolefin resin foam which is preferably used for stamping of an automobile interior material.

BRIEF DESCRIPTION OF THE DRAWINGS

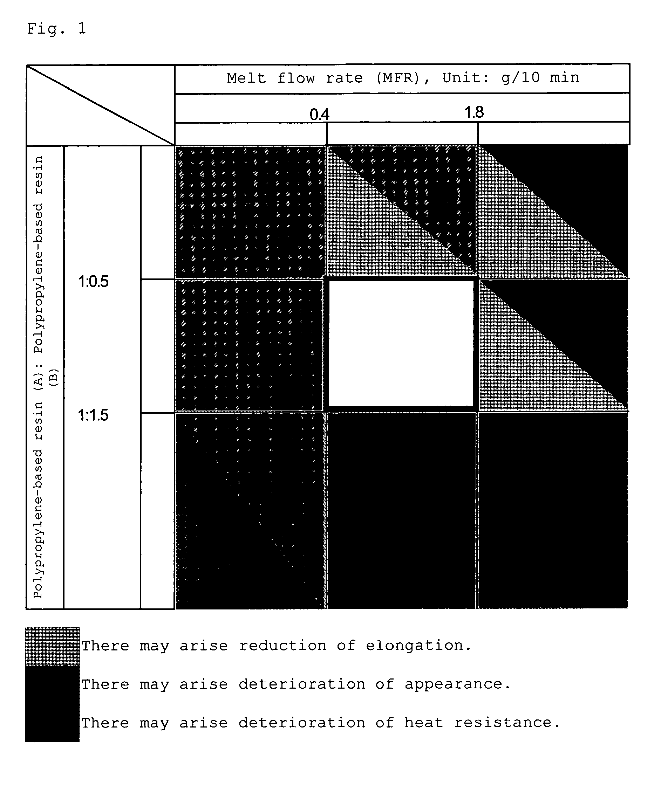

Fig. 1 shows that a melt flow rate (MFR) of a polypropylene-based resin (A) used in the present invention and a more preferred relationship with a weight ratio of the polypropylene-based resin (A) to a polypropylene-based resin (B). Also, Fig. 1 is a schematic view showing defects which may arise in each section of the relationship.

Specifically, in Fig. 1, when the polypropylene-based resin (A) has a low melt flow rate (MFR), decomposition of a thermal decomposition type blowing agent is accelerated by applying a high shear force in case of kneading a polyolefin resin composition and appearance of the resulting crosslinked polyolefin resin foam may be impaired. Also, when the polypropylene-based resin (A) has a high MFR, sufficient tensile elongation at normal temperature may not be obtained when used in a common forming method (for example, a stamping method or a vacuum forming method) and sufficient heat resistance may not be obtained when particularly used in a stamping method. When the content of the polypropylene-based resin (B) is small in the weight ratio of the polypropylene-based resin (A) to the polypropylene-based resin (B), it may be causative of insufficient tensile elongation at normal temperature. Also, when the content of the polypropylene-based resin (B) is large, sufficient heat resistance may not be obtained when used in the stamping method.
Fig. 1 shows that MFR of the polypropylene-based resin (A) is particularly preferably within a range from 0.4 to 1.8 g/10 min and the weight ratio of the polypropylene-based resin (A) to the polypropylene-based resin (B) is particularly preferably within a range from 1:0.5 to 1:1.5.

BEST MODE FOR CARRYING OUT THE INVENTION

The present inventors have intensively studied about the above object, that is, a crosslinked polyolefin resin foam having excellent heat resistance, which can be formed into a complicated shape without causing forming defects, and found that the above object can be achieved by forming a polyolefin resin composition composed of a polypropylene-based resin (A) having a specific melting point peak, a polypropylene-based resin (B) having a specific melting point peak and a polyethylene-based resin, followed by crosslinking and further foaming the formed polyolefin resin composition. Thus, the present invention has been completed.
That is, the crosslinked polyolefin resin foam of the present invention is basically composed of a polyolefin resin composition containing 20 to 50% by weight of a polypropylene-based resin (A) which shows at least one endothermic peak measured by differential scanning calorimeter at a temperature of 160°C or higher, 20 to 50% by weight of a polypropylene-based resin (B) which shows an endothermic peak measured by differential scanning calorimeter at a temperature of lower than 160°C, and 20 to 40% by weight of a polyethylene-based resin (c).
Examples of the polypropylene-based resin (A) used in the present invention include resins such as an ethylene-propylene random copolymer, an ethylene-propylene block copolymer, an ethylene-propylene random block copolymer and a homopolypropylene, among these, a ethylene-propylene block copolymer having excellent low temperature characteristics while maintaining heat resistance to be achieved by the present invention is used particularly preferably.
The ethylene content of the ethylene-propylene random copolymer and that of the ethylene-propylene random block copolymer among these copolymers are preferably less than 1% by weight in view of an endothermic peak measured by a differential scanning calorimeter. Also, the content of the ethylene-propylene rubber in the ethylene-propylene block copolymer and the ethylene-propylene random block copolymer is not specifically limited, but is preferably within a range where the effect of the present invention is not adversely affected, for example, less than 30% by weight.
The molecular weight of the polypropylene-based resin (A) in the present invention may be a common molecular weight and is not specifically limited. For example, the polypropylene-based resin (A) to be used preferably has a weight average molecular weight within a range from 100,000 to 1,500,000 and molecular weight distribution (weight average molecular weight/number average molecular weight) within a range from 1.5 to 10.
The melt flow rate (MFR) of the polypropylene-based resin (A) is measured under conventional conditions of a temperature of 230°C and a load of 2.16 kgf in conformity with JIS K7210 (1999), and MFR of the polypropylene-based resin (A) used in the present invention is preferably within a range from 0.4 to 1.8 g/10 min.

When MER is less than 0.4 g/10 min, the thermal decomposition type blowing agent is decomposed by shear when formed into a sheet, and thus there may cause a problem of appearance. In contrast, when MFR is more than 1.8 g/10 min, the foamed sheet may have insufficient heat resistance. MFR of the polypropylene-based resin (A) is more preferably from 0.5 to 1.7 g/10 min, and still more preferably from 0.6 to 1.6 g/10 min.

MFR commonly has a strong correlation with a molecular weight and when the molecular weight is large, the value of MFR decreases. In contrast, when the molecular weight is small, the value of MFR increases. However, the value cannot be unconditionally limited because it varies depending on the polymerization ratio and molecular weight distribution.

It is important that at least one of endothermic peaks measured by a differential scanning calorimeter of the polypropylene-based resin (A) used in the present invention is shown at 160°C or higher.

The term "endothermic peak" as used herein refers to a peak which is measured by an endothermic reaction, which arises when a crystal of a crystalline polymer is melted, using a differential scanning calorimeter and is commonly treated as a melting point. As the endothermic peak increases, it becomes more difficult to melt and the heat resistance is excellent.

To adjust at least one of endothermic peaks measured by a differential scanning calorimeter of the polypropylene-based resin (A) used in the present invention to 160°C or higher, the weight average molecular weight is preferably 100, 000 or more. In case of the polypropylene-based resin in which ethylene molecules are introduced into a main chain, such as the ethylene-propylene random copolymer and the ethylene-propylene random block copolymer, the ethylene content is preferably less than 1% by weight.

In the crosslinked polyolefin resin foam of the present invention, it is important that the amount of the polypropylene-based resin (A) is from 20 to 50% by weight. The amount is preferably from 25 to 45% by weight, and more preferably from 28 to 42% by weight. If the amount of the polypropylene-based resin (A) is less than 20% by weight, the surface may be roughened by resin flow upon stamping because of insufficient heat resistance upon forming. In contrast, when the amount of the polypropylene-based resin (A) is more than 50% by weight, there may cause a problem of appearance because the thermal decomposition type blowing agent is decomposed when formed into a sheet.

It is important that an endothermic peak measured by a differential scanning calorimeter of the polypropylene-based resin (B) used in the present invention is shown at lower than 160°C. The term "endothermic peak" as used herein is as defined with respect to the polypropylene-based resin (A).

In the homopropylene and the ethylene-propylene block copolymer, the weight average molecular weight is preferably 100,000 or less. In the ethylene-propylene random copolymer and the ethylene-propylene random block copolymer, the ethylene content is preferably 1% by weight or more.

Examples of the polypropylene-based resin (B) used in the present invention include propylene homopolymers such as isotactic homopolypropylene, syndiotactic homopolypropylene and atactic homopolypropylene; $\alpha$-olefin-propylene copolymers (the term "$\alpha$-olefin" used herein refers to ethylene, 1-butene, 1-pentene, 1-hexylene, 1-heptene, 1-octene and 1-nonene) such as ethylene-propylene random copolymer, ethylene-propylene block copolymer and ethylene-propylene random block copolymer; and propylene block copolymers having a block moiety, such as modified polypropylene resin, and ethylene, isoprene, butadiene and styrene. These resins may be used alone or in combination.

As the polypropylene-based resin (B), an ethylene-propylene random copolymer is particularly preferably used because it is possible to reconcile formability and heat resistance in good balance.

MFR of the polypropylene-based resin (B) is not specifically limited. MFR may be optionally decided so long as desired physical properties and production defects do not arise.

The molecular weight of the polypropylene-based resin (B) in the present invention may be a common molecular weight and is not specifically limited. For example, the weight average molecular weight of the polypropylene-based resin to be used is preferably within a range from 1,000 to 1,500,000.

In the crosslinked polyolefin resin foam of the present invention, it is important that the amount of the polypropylene-based resin (B) having an endothermic peak measured by a differential scanning calorimeter of lower than 160°C is within a range from 20 to 50% by weight, and preferably from 30 to 40% by weigh. When the amount of the polypropylene-based resin (B) is more than 50% by weight, there causes a problem of heat resistance. In contrast, when the amount is less than 20% by weight, desired formability cannot be obtained.

The polyethylene-based resin (C) used in the present invention may be a homopolymer (ultralow density: less than 0.910 g/cm$^3$, low density: 0.910 to 0.925 g/cm$^3$, middle density: 0.926 to 0.940/cm$^3$, high density: 0.941 to 0.965 g/cm$^3$) of ethylene, a copolymer containing ethylene as a main component, or a mixture thereof. Examples of the copolymer containing ethylene as a main component include ethylene-$\alpha$-olefin copolymer (a linear low density polyethylene) obtained by polymerizing ethylene with $\alpha$-olefin having 4 or more carbon atoms (for example, ethylene, 1-butene, 1-pentene, 1-hexylene, 4-methyl-1-pentene, 1-heptene and 1-octene), and ethylene-vinyl acetate copolymer. In the present invention, a linear low density polyethylene is particularly preferably used as the polyethylene-based resin.

The linear low density polyethylene is preferably used because an improvement in formability to be achieved by the present invention is expected.

The molecular weight of the polyethylene-based resin (C) may be a common molecular weight and is not specifically limited. For example, the polypropylene-based resin to be used has preferably a number average molecular weight within a range from 1,000 to 1,000,000.

The melt flow rate (MFR) of the polyethylene-based resin (C) is measured under conventional conditions of a temperature 190°C, load 2.16 kg in conformity with ISK7210 (1999). The melt flow rate (MFR) of the polyethylene-based resin (C) is preferably within a range from 0.5 to 15 g/10 min. When MFR is less than 0.5 g/10 min, the surface may be roughened when formed into a sheet to cause a problem of appearance. In contrast, when MFR is more than 15 g/10 min, the foamed sheet may have insufficient heat resistance. MFR is more preferably within a range from 1.0 to 10 g/10 min.

MFR has commonly a strong correlation with a molecular weight and when the molecular weight is large, the value of MFR decreases. In contrast, when the molecular weight is small, the value of MFR increases. However, the value cannot be unconditionally limited because it varies depending on the branched form and amount of molecules, and molecular weight distribution.

In the crosslinked polyolefin resin foam of the present invention, taking account of balance with deterioration of heat resistance due to mixing of the polyethylene-based resin (C), the amount of the polyethylene-based resin (C) to be added can be decided according to the objective physical properties. The amount of the polyethylene-based resin is specifically from 20 to 40% by weight, and preferably from 20 to 35% by weight.

When the amount of the polyethylene-based resin (C) to be added is less than 20% by weight, a high shear force is applied when the polyolefin resin composition is formed into a sheet and decomposition of the thermal decomposition type blowing agent is accelerated, and thus appearance may be impaired when formed into the crosslinked polyolefin resin foam. In contrast, when the amount is more than 40% by weight, heat resistance to be achieved by the present invention may be impaired.

In the crosslinked polyolefin resin foam of the present invention, other thermoplastic resins may be added so long as characteristics of the present invention are not drastically impaired.

Examples of the other thermoplastic resin as used in the present invention include resins containing no halogen, for example, polystyrene, polymethyl methacrylate, an acrylic resin such as styrene-acrylic acid copolymer, styrene-butadiene copolymer, ethylene-vinyl acetate copolymer, polyvinyl acetate, polyvinyl alcohol, polyvinyl acetal, polyvinyl pyrrolidone, petroleum resin, cellulose derivative such as cellulose, cellulose acetate, cellulose nitrate, methyl cellulose, hydroxymethyl cellulose, hydroxymethyl cellulose or hydroxypropyl cellulose, a saturated alkyl polyester resin, polyethylene terephthalate and polybutylene terephthalate, an aromatic polyester resin such as polyallytate, polyamide resin, polyacetal resin, polycarbonate resin, polyestersulfone resin, polyphenylene sulfide resin, polyether ketone resin, and copolymer including a vinyl polymerizable monomer and nitrogen-containing vinyl monomer. The other thermoplastic resin also includes elastomers such as isoprene rubber, styrene butadiene rubber, butyl rubber, dimethylsilicone rubber and ethylene propylene rubber.

Also, examples of the other thermoplastic resin containing a halogen include polyvinyl chloride, vinylidene polychloride, polychlorotrifluoroethylene, vinylidene polyfluoride resin, fluorocarbon resin, perfluorocarbon resin, and solvent-soluble perfluorocarbon resin. These resins to be contained may be used alone or in combination. According to physical properties to be desired in the crosslinked polyolefin resin foam of the present invention, the kind and the amount of other thermoplastic resins are selected.

The term "gel" used in the present invention refers to a resin obtained by crosslinking and polymerization, that is, a portion which is not commonly plasticized at a forming temperature, for example, 180°C. When the content of this portion increases, heat resistance is improved, but formability deteriorates. Therefore, the proportion of the gel (which is referred to as a gel fraction hereinafter in the present invention) is optionally selected depending on the forming method.

As the gel fraction of the crosslinked polyolefin resin foam of the present invention, an optional value can be selected depending on the forming method. For example, the gel fraction of the crosslinked polyolefin resin foam formed by a low-pressure injection forming method is preferably from 45 to 65%, and more preferably from 50 to 60%. Also, the gel fraction of the crosslinked polyolefin resin foam formed by a vacuum forming method is preferably from 25 to 50%, and more preferably from 30 to 45%. The gel fraction of the crosslinked polyolefin resin foam formed by a forming method of conducting a low-pressure injection forming after prevacuum forming is preferably from 40 to 60%, and more preferably from 45 to 55%.

The term "gel fraction" used in the present invention refers to a calculated value. Specifically, the gel fraction is determined as follows. That is, about 50 mg of the crosslinked polyolefin resin foam is accurately weighed, immersed in 25 ml of xylene at a temperature of 120°C for 24 hours and filtered through a 200 mesh wire netting made of stainless steel, and then the wire netting-shaped insoluble component is vacuum-dried. This insoluble component is accurately weighed. The gel fraction refers to weight percentage of this insoluble component to the weight of the foam before dissolution and is represented by the following formula.

Gel fraction (%) = (Weight of Insoluble Component/Weight of Foam Before dissolved) x 100

In the crosslinked polyolefin resin foam of the present invention, an indicator which expresses formability is that in which a tensile elongation a (%) at normal temperature measured in conformity with JIS K6767 (1999) satisfies a relationship in the following formula (1) with an apparent density b (kg/m$^3$) and a gel fraction c(%).

$$a > 2 \times b - 3 \times c + 200 \quad \text{Formula (1)}$$

When it does not satisfy the above formula (1), breakage may arise by application of a high shear force to the corner R when the low-pressure injection forming is conducted.

In the present invention, there is more preferred relationship with respect to the melt flow rate (MFR) of the polypropylene-based resin (A) to be used and a ratio of the polypropylene-based resin (A) to the polypropylene-based resin (B). More preferred melt flow rate of the polypropylene-based resin (A) is within a range from 0.4 to 1.8 g/10 min. When the melt flow rate of the polypropylene-based resin (A) is smaller than 0.4 4g/10 min, as described above, the thermal decomposition type blowing agent is decomposed by a shear force applied when formed into a sheet, a problem of appearance arises. In contrast, when the melt flow rate is more than 1.8 g/10 min, heat resistance may deteriorate and also tensile elongation may be insufficient.

The weight ratio of the polypropylene-based resin (A) to the polypropylene-based resin (B) is preferably within a range from 1:0.5 to 1:1.5. When the weight ratio of the polypropylene-based resin (B) is less than 0.5, a high shear force is applied upon kneading, and thus the thermal decomposition type blowing agent may be decomposition and the surface state may become worse. In contrast, when the weight ratio of the polypropylene-based resin (B) is more than 1.5, the resulting crosslinked polyolefin resin foam may have insufficient heat resistance.

Defects, which may arise in each section of the relationship, are schematically shown in Fig. 1.

In case of producing a foam from a polyolefin resin composition containing a polypropylene-based resin (A), a polypropylene-based resin (B) and a polyethylene-based resin (C) used in the present invention, a thermal decomposition type blowing agent is preferably used.

The thermal decomposition type blowing agent may be a thermal decomposition type blowing agent having a decomposition temperature which is higher than a melting temperature of the polyolefin resin composition. The thermal decomposition type blowing agent is preferably azodicarbonamide and further includes hydrazonecarbonamide, azodicarboxylic acid barium salt, dinitrosopentaethylenetetramine, nitrosoguanidine, p,p'-oxybisbenzenesulfonylsemicarbazide, trihydrazine symmetric triazine, bisbenzenesulfonylhydrazide, barium azodicarboxylate, azobisisobutyronitrile, and toluenesulfonylhydrazide, each having the same as or higher decomposition temperature than that of azodicarbonamide. These thermal decomposition type blowing agents may be used alone or in combination. The amount of the thermal decomposition type blowing agent is commonly from about 2 to 40 parts by weight based on 100 parts by weight of the total amount of the resin component and is adjusted depending on the desired foaming ratio.

In case of producing the crosslinked polyolefin resin foam of the present invention, an auxiliary crosslinking agent can also be used.

In the present invention, a polyfunctional monomer can be used as the auxiliary crosslinking agent. Examples of usable polyfunctional monomer include monomers, for example, divinylbenzene, diallylbenzene, divinylnaphthalene, divinylbiphenyl, divinylcarbazole, divinylpyridine, and nucleus-substituted compounds and related analogues thereof; acrylic acid-based compounds or methacrylic acid-based compounds such as ethylene glycol diacrylate, ethylene glycol dimethacrylate, butylene glycol diacrylate, butylene glycol dimethacrylate, triethylene glycol diacrylate, triethylene glycol dimethacrylate, tetraethylene glycol diacrylate, tetraethylene glycol dimethacrylate, 1,6-hexanediol diacrylate, 1,6-hexanediol dimethacrylate, 1,9-nonanediol diacrylate, 1,9-nonanediol dimethacrylate, 1,10-decanediol diacrylate, and 1,10-decanediol dimethacrylate; vinyl ester, allyl ester, acryloyloxyalkyl ester and methacryloyloxyalkyl ester of aliphatic dihydric carboxylic acid or aromatic dihydric carboxylic acid, such as divinyl phthalate, diallyl phthalate, diallyl maleate and bisacryloyloxyethyl terephthalate; vinyl ether and allyl ether of aliphatic dihydric alcohol or aromatic dihydric alcohol, such as diethylene glycol divinyl ether, triethylene glycol divinyl ether, tetraethylene glycol divinyl ether, polyethylene glycol divinyl ether, hydroquinone divinyl ether and bisphenol A diallyl ether; maleimide-based compounds such as N-phenylmaleimide and N,N'-m-phenylenebismaleimide; and compounds having two triple bonds such as dipropalgyl phthalate and dipropalgyl maleate.

Furthermore, in the present invention, it is possible to use, as the other auxiliary crosslinking agent, acrylic acid-based compounds or methacrylic acid-based compounds, such as trimethylolpropane triacrylate, trimethylolpropane trimethacrylate, tetramethylolmethane triacrylate, tetramethylolmethane trimethacrylate, tetramethylolmethane tetraacrylate, and tetramethylolmethane tetramethacrylate; polyvinyl ester, polyallyl ester, polyacryloyloxyalkyl ester and polymethacryloyloxyalkyl ester of aromatic polyhydric carboxylic acids or aliphatic polyhydric carboxylic acids, such as triallyl trimellitate ester, triallyl pyromellitate ester and tetraallyl pyromelliate ester; allyl ester of cyanuric acid or isocyanuric acid, such as triallyl cyanurate and triallyl isocyanurate; and polyfunctional monomers such as triallyl phosphate and trisacryloxyethyl phosphate.

These auxiliary crosslinking agents may be used alone or in combination. The amount of the auxiliary crosslinking agent is preferably from 0.1 to 30 parts by weight, more preferably from 0.5 to 15 parts by weight, based on 100 parts by weight of the total amount of the resin component and is adjusted depending on the desired gel fraction.

Also, the polyolefin resin composition can be crosslinked by using the auxiliary crosslinking agent in combination with an organic peroxide. As the organic peroxide, for example, methyl ethyl ketone peroxide, t-butyl peroxide and dicumyl peroxide are used. The amount of the organic peroxide is preferably from 0.01 to 10 parts by weight, and more preferably from 0.05 to 5 parts by weight, based on 100 parts by weight of the total amount of the resin component, and is adjusted depending on the desired gel fraction.

In the present invention, the gel fraction is adjusted taking account of heat resistance and cushioning properties. In the present invention, so-called chemical crosslinking method and crosslinking method through ionizing radiation may be used in combination in case of crosslinking the polyolefin resin composition.

So long as the feature of the present invention is not impaired, the polyolefin resin composition can be mixed with various additives such as decomposition accelerators of the blowing agent, cell-nucleation adjustors, antioxidants, heat stabilizers, colorants, flame retardants, antistatic agents and inorganic fillers.

In the present invention, the crosslinked polyolefin resin foam can be produced by forming the polyolefin resin composition mixed with various components described above into a predetermined form, followed by crosslinking and foaming.

The method of producing a crosslinked polyolefin resin foam includes, for example, the following methods. A predetermined amount of the above polyolefin resin composition is uniformly melt-kneaded at a temperature lower than a decomposition temperature of the thermal decomposition type blowing agent using a kneader such as single screw extruder, twin screw extruder, Banbury mixer, kneader mixer or mixing roll, and then the kneaded mixture is formed into a sheet.

Then, the resulting sheet-like article is irradiated with ionizing radiation at a predetermined dose, thereby curing a resin, and the crosslinked sheet-like article is foamed by heating to the temperature which is higher than the decomposition temperature of the thermal decomposition type blowing agent. As the ionizing radiation, for example, electron beam, X-ray, β-ray and γ-ray are used. The irradiation dose is commonly from about 1 to 300 kGy and the dose is adjusted depending on the desired gel fraction. Also, crosslinking or silane crosslinking with a peroxide may be conducted in place of crosslinking with irradiation using ionizing radiation.

The foamable sheet-like article in which a resin is crosslinked is heated to a temperature, which is the decomposition temperature of the thermal decomposition type blowing agent or higher and the melting point of the resin or higher, for example, 190 to 290°C using a hot air, infrared ray, a metal bath, an oil bath or a salt bath, and then the resin is foamed by a decomposition gas of a blowing agent to obtain the crosslinked polyolefin resin foam of the present invention.

The endothermic peak measured by a differential scanning calorimeter of the crosslinked polyolefin resin foam is preferably 155°C or higher. The reason is as follows. That is, it is expected that appearance defects such as melting (gate marks) of a foam of a gate portion, where a molten resin is ejected, caused upon low-pressure injection forming and melting (creaters) of a foam caused by application of a high shear force at a vertical wall portion are reduced as compared with the case where endothermic peak is not within the above range.

Thus, the crosslinked polyolefin resin foam, which include closed cells and optionally shows a foaming ratio within a range from 2 to 45 depending on the amount of the blowing agent, and also has beautiful appearance, can be obtained.

In a method for evaluation of heat resistance of the crosslinked polyolefin resin foam of the present invention, characteristics of a tensile elongation at high temperature can be employed as an indicator. Heat resistance preferably satisfies a relationship between a tensile elongation (%) at 150°C or lower and a tensile elongation (%) at 170°C or lower of the following formula (2).

$$\text{(Tensile Elongation (\%) at 170°C or lower)} / \text{(Tensile Elongation (\%) at 150°C or lower)} \geq 1 \qquad \text{Formula (2)}$$

When the formula (2) is not satisfied, acceleration of deterioration to heating is considered and defects may arise upon forming at high temperature.

In evaluation of formability of the crosslinked polyolefin resin foam of the present invention, a draw ratio can be employed as an indicator. As the draw ratio, an optional value may be selected depending on the forming method. For example, the draw ratio of the crosslinked polyolefin resin foam obtained by a low-pressure injection forming method is preferably 0.4 or more, and more preferably 0.5 or more. Also, in case of a vacuum forming method, the draw ratio is preferably 0.6 or more, and more preferably 0.7 or more. In case of a forming method in which low-pressure injection forming is conducted after prevacuum forming, the draw ratio is preferably 0.5 or more, and more preferably 0.6 or more.

It is possible to obtain a laminate, which shows more excellent heat resistance to heating upon forming, using the crosslinked polyolefin resin foam obtained by the method described above. The laminate can be produced by laminating the crosslinked polyolefin resin foam with other material(s) using a conventionally known method.

Examples of other material(s), which is(are) laminated with the crosslinked polyolefin resin foam of the present invention, include those selected from at least one from known materials such as a cloth-like article made of a natural fiber or an artificial fiber, a sheet-like article made of a polyvinyl chloride resin, a sheet-like article made of thermoplastic olefin (TPO), a thermoplastic elastomer sheet-like article, a skin material such as leather, a nonwoven fabric made of a thermoplastic resin fiber, a polyolefin resin noncrosslinked foamed sheet-like article (for example, a continuous cell foam made of polyurethane), films such as a polyester film and a polyacryl film, a plastic cardboard, a foamed paper, and a metal layer made of copper, silver or nickel. In the present invention, a plurality of these other materials may be laminated, or the other material is laminated on both surfaces of the crosslinked polyolefin resin foam, or two or more kinds of these other materials may be combined.

Examples of method of laminating the crosslinked polyolefin resin foam of the present invention with the above other material include an extrusion lamination method of melting a thermoplastic resin, a bond lamination method of laminating after applying an adhesive, a heat lamination method (also referred to as fusion) of laminating a skin material and, if necessary, a crosslinked polyolefin resin foam with heating, a hot melt method, and a high frequency welder method, and also include an electroless plating method, an electroplating method and a vacuum deposition method in case of using metal. However, the method is not limited to these methods and may be any method so long as the both are bonded.

A formed article can be obtained by forming the crosslinked polyolefin resin foam or laminate obtained by the method described above into an optional shape. Examples of the forming method include a high-pressure injection forming method, a low-pressure injection forming method, a Male pulling vacuum forming method, a female pulling vacuum forming method and a compression forming method.

In the above forming method, a thermoplastic resin is commonly used as a base material. The term "base material" used in the present invention serves as a skeleton of the formed article and the shape is selected depending on the shape of a desired formed article, for example, plate or bar.

As the thermoplastic resin for a base material used in the present invention, for example, it is possible to apply a polypropylene resin, a polypropylene resin in which propylene and $\alpha$-olefin (examples of the $\alpha$-olefin include ethylene, 1-butene, 1-pentene, 1-hexylene, 1-heptene, and 1-octene) are random, random/block or block copolymerized, a polyethylene resin, a copolymer resin of ethylene and $\alpha$-olefin, a copolymer resin of vinyl acetate and an acrylate ester, a polyolefin resin or an ABS resin obtained by optionally mixing these resins, and a polystyrene resin.

When a resin having considerably high melting point such as a polyamide-based resin or a polybutylene terephthalate-based resin is used as a base material in the crosslinked polyolefin resin foam, the melting temperature of a base material layer increases, and thus there may cause a problem that cells of the crosslinked polyolefin resin foam are broken upon pressure forming. Therefore, it is necessary to appropriately select a resin for a base material taking account of a forming method.

The term "base material layer" used in the present invention is distinguished from the base material of the crosslinked polyolefin resin foam or the skin material of the laminate in the formed article in the respect that it is laminated upon forming.

The present invention made it possible to obtain automobile interior materials such as ceiling, door and instrument panel in which the crosslinked polyolefin resin foam, the laminate or the formed article obtained by the method described above are used. It is expected to obtain the effect of reducing percentage of rejects by exhibiting excellent heat resistance to heating in case of processing upon forming, for example, low-pressure injection forming.

EXAMPLES

In the present invention, the respective physical properties were evaluated by the following methods.

(Method for Measurement of Melt Flow Rate)

The measurement is conducted in conformity with JIS K7210 (1999) "Test Method of Melt Mass Flow Rate (MFR) and Melt Volume Flow Rate (MVR) of Plastic-Thermoplastic Plastic". The test was conducted under the conditions of a temperature of 230°C and a load of 2.16 kgf in case of a polypropylene-based resin (A), or conducted under the conditions of a temperature 190°C and a load of 2.16 kgf in case of a polyethylene-based resin on the basis of Annex B (Reference) of the above standards "Standards, Designation and Test Conditions of Thermoplastic Plastic Materials".

A melt flow rate in the present invention is determined by measuring the weight of a resin extruded through a die for 10 minutes by an annual cutting method using Melt Indexer Model F-B01 manufactured by Toyo Seiki Seisakujyo Co., Ltd.

(Method for Analysis of Endothermic Peak Using Differential Scanning Calorimeter)

In the present invention, an endothermic peak was analyzed by the following method using a differential scanning calorimeter. About 10 mg of a polyolefin resin (a polypropylene-based resin or a polyethylene-based resin in the present invention) or a crosslinked polyolefin resin foam whose cells have been collapsed with a roll was put in a platinum pan and an endothermic peak was measured using a differential scanning calorimeter (DSC : RDC220-Robot DSC manufactured by Seiko Electronic Co. Ltd.). The endothermic peak was measured after a sample was once melted, cooled to a temperature of -50°C at a rate of 10°C/min and then heated at a rate of 5°C/min.

(Method for Measurement of Molecular Weight Distribution)

As a method for measurement of molecular weight distribution in the present invention, a method for gel permeation chromatography (GPC) was employed. To 5 mg of a sample (herein, a polypropylene-based resin (A), a polypropylene-based resin (B) and a polyethylene-based resin(C)), 5 mL of ortho-dichlorobenzene (ODCB) was added. After dissolving the sample with heating at a temperature of 140°C for 2 hours or more, the solution was filtered through a 0.5 $\mu$m filter and the filtrate was used as a test solution. 150C ALC/GPC (manufactured by Waters Co.) was used as an apparatus and Shodex AT-806MS measuring 8 mm$\phi$ x 250 mm$\phi$ (2 columns) was used as a column, and differential refractometry was employed as a detector. A mobile phase was ortho-dichlorobenzene described above and the measurement was conducted under the conditions of a rate of 1.0 mL/min and a temperature of 140°C or lower. As a measured value, a polystyrene equivalent value was employed.

(Method for Measurement of Gel Fraction)

A gel fraction means a calculated value. A crosslinked polyolefin resin foam (about 50 mg) was accurately weighed, dipped in 25 mL of xylene at a temperature of 120°C for 24 hours and filtered through a 200 mesh stainless steel wire netting, and then the wire netting-shaped insoluble component was vacuum-dried. The weight of this insoluble component was accurately weighed and a gel fraction % was calculated by the following formula (3).

$$\text{Gel fraction (\%)} = \{\text{Weight (mg) of Insoluble Component/Weight (mg) of Weighed Polyolefin Resin Foam}\} \times 100$$

$$\text{Formula (3)}$$

(Method for Measurement of Apparent Density)

An apparent density was measured in conformity with JIS K6767 (1999) "Foamed Plastic-Polyethylene-Test Method". Specifically, the resulting sheet-like crosslinked polyolefin resin foam was punched out to obtain a sample having a size of 15 cm$^3$ or more and the thickness and the weight were measured, and then an apparent density was calculated by the following formula (4).

$$\text{Apparent density (kg/m}^3) = \text{Sample Weight (kg)/\{Sample Thickness (m)} \times \text{Sample Area (m}^2)\} \quad \text{Formula (4)}$$

(Method for Measurement of Tensile Elongation at Normal Temperature)

A tensile elongation was measured in conformity with JIS K6767 (1999) "Foamed Plastic-Polyethylene-Test Method". Specifically, the resulting sheet-like crosslinked polyolefin resin foam was punched out to obtain a dumbbell-shaped specimen No. 1. The tensile elongation of the specimen is measured by Instron Tension Universal Tester UCT-500 manufactured by Orientec Co., Ltd. and was calculated as follows. That is, a difference between a length between marked lines after breakage and a length between original marked lines is divided by a length between original marked lines and the resulting value is expressed by percentage.

(Method for Evaluation of Tensile Elongation at Normal Temperature)

With respect to this measured value, the following relational expression (1) is used as evaluation criteria.

$$a > 2 \times b - 3 \times c + 200 \quad \text{Formula (1)}$$

where a denotes a tensile elongation (%), b denotes an apparent density ($kg/m^3$), and c denotes a gel fraction (%).

(Method for Measurement of Tensile Elongation at High Temperature)

A tensile elongation is measured in conformity with "Method for Measurement of Tensile Elongation at Normal Temperature". The following heating method was employed. That is, a high-low temperature constant temperature bath TLF2-U2-J-F manufactured by Orientec Co., Ltd. was adjusted to a desired temperature and a parallel clamping jaw portion (portion to be measured) of Instron Tension Universal Tester was heated while being surrounded with the bath. A sample was mounted, preheated for 6 minutes and then measured.

(Method for Evaluation of Heat Resistance)

The value measured by "Method for Measurement of Tensile Elongation at High Temperature" was evaluated according to the following evaluation criteria.

$$\text{(Tensile Elongation \% at } 170°C)/(\text{Tensile Elongation \% at } 150°C) \geq 1 \quad \text{Formula (2)}$$

With heat resistance O: satisfying the above formula (2)
No heat resistance X: not satisfying the above formula (2)

(Method for Evaluation of Surface Properties)

Surface properties were evaluated as follows. That is, surface roughness was measured using a surface roughness meter SURFCORDER SE-2300 manufactured by Kosaka Laboratory Ltd. and the surface properties were evaluated from the measured value of Ra75 according to the following criteria.

Surface properties O: Ra75 value is less than 25 $\mu$m
Surface properties $\Delta$: Ra75 value is 25 $\mu$m or more and less than 30 $\mu$m
Surface properties X: Ra75 value is 30 $\mu$m or more

(Method for Evaluation of Formability)

The resulting crosslinked polyolefin resin foam was vacuum-foamed and then appearance and a draw ratio were evaluated. Appearance was visually observed whether or not blister and wrinkles occur. A draw ratio denotes a value H/D at a limit where a foam is spread and extended into a cylindrical form without being broken when the foam is heated on a female die having a vertical cylindrical form having a diameter of D and a depth of H and then straight formed using a vacuum forming machine. Herein, the diameter D is 50 mm. The draw ratio was measured at three points of the foam, each having a surface temperature of 160°C, 180°C and 200°C, and then the value was evaluated according to the following criteria.

Formability O: At two or more points of a different temperature, a draw ratio is 0.50 or more and good appearance is obtained.

Formability $\Delta$: At one point of a temperature, a draw ratio is 0.50 or more and good appearance is obtained.

Formability X: At no point of a temperature, a draw ratio is 0.50 or more, or poor appearance is obtained.

(General evaluation)

From evaluation results in "Method for Evaluation of Heat resistance", "Method for Evaluation of Surface Properties" and "Method for Evaluation of Formability", general evaluation was conducted according to the following criteria.

General evaluation O: All samples were rated "O".
General evaluation Δ: Two samples or less were rated "O" and no sample was rated "X".
General evaluation X: One or more samples were rated "X"

Evaluation results are as follows.

O: Excellent
Δ: Good
X: Poor

Example 1

A mixture obtained by mixing 40% by weight of a polypropylene-based resin (A) (ethylene-propylene block copolymer:MFR = 1.3 g/10 min, DSC peak temperature: 164°C, Mw = 470,000), 40% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density polyethylene:MFR = 12 g/10 min, density: 0.932 g/cm$^3$, Mw = 60,000), 8 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.
The sheet thus obtained was irradiated with electron beam of 100 kGy using an electron beam irradiator, thereby crosslinking the resin. The crosslinked sheet was immersed in a salt bath heated to a temperature of 240°C to obtain a crosslinked polyolefin resin foam having a thickness of 2.1 mm, an apparent density of 67 kg/m$^3$ and a gel fraction of 56%.
With respect to the resulting crosslinked polyolefin resin foam, a tensile elongation at normal temperature was measured and found to be 180%. Also, cells were collapsed by pressing the resulting crosslinked polyolefin resin foam using a mixing roll and an endothermic peak temperature was confirmed by a differential scanning calorimeter and found to be 156°C. Furthermore, a draw ratio was measured and found to be 0.50 or more at a temperature of 160°C, 180°C and 200°C. A tensile elongation at a temperature of 150°C was 200% and a tensile elongation at a temperature of 170°C was 220%. Also, surface roughness Ra75 value was 20 μm.

Example 2

A mixture obtained by mixing 30% by weight of a polypropylene-based resin (A) (homopolypropylene:MFR = 0.9 g/10 min, DSC peak temperature: 167°C, Mw = 560,000), 40% by weight of a polypropylene-based resin (B) (ethylene-propylene random copolymer:MFR = 0.8 g/10 min, DSC peak temperature: 148°C, Mw = 1,100,000), 30% by weight of a polyethylene-based resin (C) (linear low density polyethylene:MFR = 12 g/10 min, density: 0.932 g/cm$^3$, Mw = 60,000), 9 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.
The sheet thus obtained was irradiated with electron beam of 150 kGy using an electron beam irradiator, thereby crosslinking the resin. The crosslinked sheet was immersed in a salt bath heated to a temperature of 240°C to obtain a crosslinked polyolefin resin foam having a thickness of 1. 9 mm, an apparent density of 70 kg/m$^3$ and a gel fraction of 54%.
With respect to the resulting crosslinked polyolefin resin foam, a tensile elongation at normal temperature was measured and found to be 190%. Also, cells were collapsed by pressing the resulting crosslinked polyolefin resin foam using a mixing roll and an endothermic peak temperature was confirmed by a differential scanning calorimeter and found to be 159°C. Furthermore, a draw ratio was measured and found to be 0.50 or more at a temperature of 160°C, 180°C and 200°C. A tensile elongation at a temperature of 150°C was 190% and a tensile elongation at a temperature of 170°C was 210%. Also, surface roughness Ra75 value was 19 μm.

Example 3

A mixture obtained by mixing 50% by weight of a polypropylene-based resin (A) (ethylene-propylene block copolymer:MFR = 1.3 g/10 min, DSC peak temperature: 164°C, Mw = 470,000), 30% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density polyethylene:MFR = 12 g/10 min, density: 0.932 g/cm$^3$, Mw = 60,000), 6 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 1. 6 mm, an apparent density of 85 kg/m$^3$ and a gel fraction of 54%.

With respect to the resulting crosslinked polyolefin resin foam, a tensile elongation at normal temperature was measured and found to be 240%. Also, cells were collapsed by pressing the resulting crosslinked polyolefin resin foam using a mixing roll and an endothermic peak temperature was confirmed by a differential scanning calorimeter and found to be 156°C. Furthermore, a draw ratio was measured and found to be 0.50 or more at a temperature of 180°C and 200°C. A tensile elongation at a temperature of 150°C was 210% and a tensile elongation at a temperature of 170°C was 260%. Also, surface roughness Ra75 value was 17 μm.

Example 4

A mixture obtained by mixing 40% by weight of a polypropylene-based resin (A) (ethylene-propylene block copolymer:MFR = 1.7 g/10 min, DSC peak temperature: 162°C, Mw = 420,000), 40% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density polyethylene:MFR = 12 g/10 min, density: 0.932 g/cm$^3$, Mw = 60,000), 7 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 90 kGy using an electron beam irradiator, thereby crosslinking the resin. The crosslinked sheet was immersed in a salt bath heated to a temperature of 240°C to obtain a crosslinked polyolefin resin foam having a thickness of 2.0 mm, an apparent density of 67 kg/m$^3$ and a gel fraction of 50%.

With respect to the resulting crosslinked polyolefin resin foam, a tensile elongation at normal temperature was measured and found to be 250%. Also, cells were collapsed by pressing the resulting crosslinked polyolefin resin foam using a mixing roll and an endothermic peak temperature was confirmed by a differential scanning calorimeter and found to be 155°C. Furthermore, a draw ratio was measured and found to be 0.50 or more at a temperature of 160°C, 180°C and 200°C. A tensile elongation at a temperature of 150°C was 210% and a tensile elongation at a temperature of 170°C was 260%. Also, surface roughness Ra75 value was 17 μm.

Example 5

A mixture obtained by mixing 40% by weight of a polypropylene-based resin (A) (homopolypropylene:MFR = 0.5 g/10 min, DSC peak temperature: 165°C, Mw = 860,000), 40% by weight of a polypropylene-based resin (B) (ethylene-propylene random copolymer:MFR = 2.2 g/10 min, DSC peak temperature: 138°C, Mw = 830,000), 20% by weight of a polyethylene-based resin (C) (linear low density polyethylene:MFR = 12 g/10 min, density: 0.932 g/cm$^3$, Mw = 60,000), 6 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 120 kGy using an electron beam irradiator, thereby crosslinking the resin. The crosslinked sheet was immersed in a salt bath heated to a temperature of 240°C to obtain a crosslinked polyolefin resin foam having a thickness of 1. 7 mm, an apparent density of 72 kg/m$^3$ and a gel fraction of 52%.

With respect to the resulting crosslinked polyolefin resin foam, a tensile elongation at normal temperature was measured and found to be 220%. Also, cells were collapsed by pressing the resulting crosslinked polyolefin resin foam using a mixing roll and an endothermic peak temperature was confirmed by a differential scanning calorimeter and found to be 155°C. Furthermore, a draw ratio was measured and found to be 0.50 or more at a temperature of 160°C, 180°C and 200°C. A tensile elongation at a temperature of 150°C was 210% and a tensile elongation at a temperature of 170°C was 230%. Also, surface roughness Ra75 value was 22 μm.

Example 6

A mixture obtained by mixing 50% by weight of a polypropylene-based resin (A) (an ethylene-propylene block copolymer:MFR = 1.3 g/10 min, DSC peak temperature: 164°C, Mw = 470,000), 25% by weight of a polypropylene-based resin (B) (an ethylene-propylene random copolymer:MFR = 0.8 g/10 min, DSC peak temperature: 148°C, Mw = 1,100,000), 25% by weight of a polyethylene-based resin (C) (a linear low density polyethylene:MFR = 12 g/10 min, density: 0.932 g/cm$^3$, Mw = 60,000**), 10 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 100 kGy using an electron beam irradiator, thereby crosslinking the resin. The crosslinked sheet was immersed in a salt bath heated to a temperature of 240°C to obtain a crosslinked polyolefin resin foam having a thickness of 2. 0 mm, an apparent density of 53 kg/m$^3$ and a gel fraction of 52%.

With respect to the resulting crosslinked polyolefin resin foam, a tensile elongation at normal temperature was measured and found to be 190%. Also, cells were collapsed by pressing the resulting crosslinked polyolefin resin foam using a mixing roll and an endothermic peak temperature was confirmed by a differential scanning calorimeter and found to be 159°C. Furthermore, a draw ratio was measured and found to be 0.50 or more only at a temperature of 200°C. A tensile elongation at a temperature of 150°C was 200% and a tensile elongation at a temperature of 170°C was 220%. Also, surface roughness Ra75 value was 21 μm.

Example 7

A mixture obtained by mixing 40% by weight of a polypropylene-based resin (A) (homopolypropylene:MFR = 2.2 g/10 min, DSC peak temperature: 166°C, Mw = 350,000), 40% by weight of a polypropylene-based resin (B) (ethylene-propylene random copolymer:MFR = 2.2 g/10 min, DSC peak temperature: 138°C, Mw = 830,000), 20% by weight of a polyethylene-based resin (C) (linear low density polyethylene:MFR = 12 g/10 min, density: 0. 932 g/cm$^3$, Mw = 60,000), 12 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 100 kGy using an electron beam irradiator, thereby crosslinking the resin. The crosslinked sheet was immersed in a salt bath heated to a temperature of 240°C to obtain a crosslinked polyolefin resin foam having a thickness of 2.2 mm, an apparent density of 49 kg/m$^3$ and a gel fraction of 51%.

With respect to the resulting crosslinked polyolefin resin foam, a tensile elongation at normal temperature was measured and found to be 220%. Also, cells were collapsed by pressing the resulting crosslinked polyolefin resin foam using a mixing roll and an endothermic peak temperature was confirmed by a differential scanning calorimeter and found to be 157°C. Furthermore, a draw ratio was measured and found to be 0.50 or more at a temperature of 180°C. A tensile elongation at a temperature of 150°C was 210% and a tensile elongation at a temperature of 170°C was 220%. Also, surface roughness Ra75 value was 23 μm.

Example 8

A mixture obtained by mixing 40% by weight of a polypropylene-based resin (A) (homopolypropylene:MFR = 0.35 g/10 min, DSC peak temperature: 165°C, Mw = 1,050,000), 40% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density polyethylene:MFR = 12 g/10 min, density: 0.932 g/cm$^3$, Mw = 60,000), 8 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 80 kGy using an electron beam irradiator, thereby crosslinking the resin. The crosslinked sheet was immersed in a salt bath heated to a temperature of 240°C to obtain a crosslinked polyolefin resin foam having a thickness of 2. 3 mm, an apparent density of 61 kg/m$^3$ and a gel fraction of 52%.

With respect to the resulting crosslinked polyolefin resin foam, a tensile elongation at normal temperature was measured and found to be 200%. Also, cells were collapsed by pressing the resulting crosslinked polyolefin resin foam using a mixing roll and an endothermic peak temperature was confirmed by a differential scanning calorimeter and found to be 156°C. Furthermore, a draw ratio was measured and found to be 0.50 or more at a temperature of 160°C, 180°C and 200°C. A tensile elongation at a temperature of 150°C was 220% and a tensile elongation at a temperature of 170°C was 240%. Also, surface roughness Ra75 value was 25 μm.

The results of Examples 1 to 8 are summarized in Table 1.

Table 1

| | | | Example | | | | | | | |
|---|---|---|---|---|---|---|---|---|---|---|
| | | | 1 | 2 | 3 | 4 | 5 | 6 | 7 | 8 |
| Polypropylene-based resin | Amount | Weight % | 40 | 30 | 50 | 40 | 40 | 50 | 40 | 40 |
| | MFR | g/10min | 1.3 | 0.9 | 1.3 | 1.7 | 0.5 | 1.3 | 2.2 | 0.35 |
| | DSC temperature peak | °C | 164 | 167 | 164 | 162 | 165 | 164 | 166 | 165 |
| | Mw | — | 470,000 | 560,000 | 470,000 | 420,000 | 860,000 | 470,000 | 350,000 | 1,050,000 |
| | Kind of resin | | Ethylene-propylene block copolymer | Homopropylene | Ethylene-propylene block copolymer | Ethylene-propylene block copolymer | Homopropylene | Ethylene-propylene block copolymer | Homopropylene | Ethylene-propylene block copolymer |
| Polyolefin resin | Amount | Weight % | 40 | 40 | 30 | 40 | 40 | 20 | 40 | 40 |
| | MFR | g/10min | 0.8 | 0.8 | 0.8 | 0.8 | 2.2 | 0.8 | 2.2 | 0.8 |
| | DSC temperature peak | °C | 148 | 148 | 148 | 148 | 138 | 148 | 138 | 148 |
| | Mw | — | 1,100,000 | 1,100,000 | 1,100,000 | 1,100,000 | 830,000 | 1,100,000 | 830,000 | 1,100,000 |
| | Kind of resin | | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer |
| Polyethylene-based resin | Amount | Weight % | 20 | 20 | 20 | 20 | 20 | 30 | 20 | 20 |
| | MFR | g/10min | 12 | 12 | 12 | 12 | 12 | 12 | 12 | 12 |
| | Density | g/cm³ | 0.932 | 0.932 | 0.932 | 0.932 | 0.932 | 0.932 | 0.932 | 0.932 |
| | Mw | — | 60,000 | 60,000 | 60,000 | 60,000 | 60,000 | 60,000 | 60,000 | 60,000 |
| | Kind of resin | | Linear low density polyethylene | Linear low density polyethylene | Linear low density polyethylene | Linear low density polyethylene | Linear low density polyethylene | Linear low density polyethylene | Linear low density polyethylene | Linear low density polyethylene |
| Physical properties of foam | Apparent density | kg/m³ | 67 | 70 | 85 | 67 | 72 | 53 | 49 | 61 |
| | Gel fraction | % | 56 | 54 | 54 | 150 | 52 | 52 | 51 | 72 |
| | Tensile elongation | % | 180 | 190 | 240 | 250 | 220 | 190 | 220 | 200 |
| | DSC temperature peak | °C | 156 | 159 | 156 | 155 | 155 | 159 | 157 | 156 |
| Evaluation | Formability | | O | O | O | O | O | △ | △ | O |
| | Surface properties | | O | O | O | O | O | O | O | △ |
| | Heat resistance | | O | O | O | O | O | O | O | O |
| | General evaluation | | O | O | O | O | O | △ | △ | △ |

The crosslinked polyolefin resin foam obtained in Example 1 was subjected to a corona discharge treatment and coated with a two-pack urethane-based adhesive, and then the coated crosslinked polyolefin resin foam was laminated with a polyvinyl chloride sheet (0.5 mm) to obtain a laminate. The laminate was formed by a low-pressure injection forming method (a thermoplastic resin: homopolypropylene, MFR = 20 g/min, resin temperature: 180°C) to obtain a formed article having beautiful appearance.

Comparative Example 1

A mixture obtained by mixing 60% by weight of a polypropylene-based resin (A) (ethylene-propylene block

Table 1

| | | | Example | | | | | | | |
|---|---|---|---|---|---|---|---|---|---|---|
| | | | 1 | 2 | 3 | 4 | 5 | 6 | 7 | 8 |
| Polypropylene-based resin | Amount | Weight % | 40 | 30 | 50 | 40 | 40 | 50 | 40 | 40 |
| | MFR | g/10min | 1,3 | 0,9 | 1,3 | 1,7 | 0,5 | 1,3 | 2,2 | 0,35 |
| | DSC temperature peak | °C | 164 | 167 | 164 | 162 | 165 | 164 | 166 | 165 |
| | Mw | - | 470.000 | 560.000 | 470.000 | 420.000 | 860.000 | 470.000 | 350.000 | 1.050.000 |
| | Kind of resin | | Ethylene-propylene block copolymer | Homopropylene | Ethylene-propylene block copolymer | Ethylene-propylene block copolymer | Homopropylene | Ethylene-propylene block copolymer | Homopropylene | Ethylene-propylene block copolymer |
| Polyolefin resin | Amount | Weight % | 40 | 40 | 30 | 40 | 40 | 20 | 40 | 40 |
| | MFR | g/10min | 0,8 | 0,8 | 0,8 | 0,8 | 2,2 | 0,8 | 2,2 | 0,8 |
| | DSC temperature peak | °C | 148 | 148 | 148 | 148 | 138 | 148 | 138 | 148 |
| | Mw | - | 1.100.000 | 1.100.000 | 1.100.000 | 1.100.000 | 830.000 | 1.100.000 | 830.000 | 1.100.000 |
| | Kind of resin | | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer | Ethylene-propylene random copolymer |
| Polyethylene-based resin | Amount | Weight % | 20 | 20 | 20 | 20 | 20 | 30 | 20 | 20 |
| | MFR | g/10min | 12 | 12 | 12 | 12 | 12 | 12 | 12 | 12 |
| | Density | g/cm³ | 0,932 | 0,932 | 0,932 | 0,932 | 0,932 | 0,932 | 0,932 | 0,932 |
| | Mw | - | 60.000 | 60.000 | 60.000 | 60.000 | 60.000 | 60.000 | 60.000 | 60.000 |
| | Kind of resin | | Linear low density polyethylene | Linear low density polyethylene | Linear low density polyethylene | Linear low density polyethylene | Linear low density polyethylene | Linear low density polyethylene | Linear low density polyethylene | Linear low density polyethylene |
| Physical properties of foam | Apparent density | kg/m³ | 67 | 70 | 85 | 67 | 72 | 53 | 49 | 61 |
| | Gel fraction | % | 56 | 54 | 54 | 150 | 52 | 52 | 51 | 72 |
| | Tensile elongation | % | 180 | 190 | 240 | 250 | 220 | 190 | 220 | 200 |
| | DSC temperature peak | °C | 156 | 159 | 156 | 155 | 155 | 159 | 157 | 156 |
| Evaluation | Formability | | ○ | ○ | ○ | ○ | ○ | △ | △ | ○ |
| | Surface properties | | ○ | ○ | ○ | ○ | ○ | ○ | ○ | △ |
| | Heat resistance | | ○ | ○ | ○ | ○ | ○ | ○ | ○ | ○ |
| | General evaluation | | ○ | ○ | ○ | ○ | ○ | △ | △ | △ |

copolymer:MFR = 1.3 g/10 min, DSC peak temperature: 164°C, Mw = 470,000), 40% by weight of a polyethylene-based resin (C) (linear low density polyethylene:MFR = 12 g/10 min, density: 0.932 g/cm$^3$, Mw = 60,000), 8 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 125 kGy using an electron beam irradiator, thereby crosslinking the resin. The crosslinked sheet was immersed in a salt bath heated to a temperature of 240°C to obtain a crosslinked polyolefin resin foam having a thickness of 2.1 mm, an apparent density of 67 kg/m$^3$ and a gel fraction of 56%.

With respect to the resulting crosslinked polyolefin resin foam, a tensile elongation at normal temperature was measured and found to be 160%. Also, cells were collapsed by pressing the resulting crosslinked polyolefin resin foam using a mixing roll and an endothermic peak temperature was confirmed by a differential scanning calorimeter and found to be 158°C. Furthermore, a draw ratio was measured and found to be 0.50 or less at a temperature of 160°C, 180°C and 200°C. A tensile elongation at a temperature of 150°C was 180% and a tensile elongation at a temperature of 170°C was 210%. Also, surface roughness Ra75 value was 19 μm.

Comparative Example 2

A mixture obtained by mixing 60% by weight of a polypropylene-based resin (A) (homopolypropylene:MFR = 2.2 g/10 min, DSC peak temperature: 166°C, Mw = 350,000), 40% by weight of a polyethylene-based resin (C) (linear low density polyethylene:MFR = 12 g/10 min, density: 0.932 g/cm$^3$, Mw = 60,000), 8 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 133 kGy using an electron beam irradiator, thereby crosslinking the resin. The crosslinked sheet was immersed in a salt bath heated to a temperature of 240°C to obtain a crosslinked polyolefin resin foam having a thickness of 2. 1 mm, an apparent density of 63 kg/m$^3$ and a gel fraction of 58%.

With respect to the resulting crosslinked polyolefin resin foam, a tensile elongation at normal temperature was measured and found to be 140%. Also, cells were collapsed by pressing the resulting crosslinked polyolefin resin foam using a mixing roll and an endothermic peak temperature was confirmed by a differential scanning calorimeter and found to be 161°C. Furthermore, a draw ratio was measured and found to be 0.50 or less at a temperature of 160°C, 180°C and 200°C. A tensile elongation at a temperature of 150°C was 180% and a tensile elongation at a temperature of 170°C was 200%. Also, surface roughness Ra75 value was 18 μm.

Comparative Example 3

A trial of forming a mixture obtained by mixing 60% by weight of a polypropylene-based resin (A) (ethylene-propylene block copolymer:MFR = 1.3 g/10 min, DSC peak temperature: 164°C, Mw = 470, 000), 40% by weight of a polypropylene-based resin (B) (ethylene-propylene block copolymer:MFR = 0.8 g/10 min, DSC peak temperature: 148°C, Mw = 1,100,000), 8 parts of azodicarbonamide as a blowing agent and 5 parts of divinylbenzene as an auxiliary crosslinking agent using a Henschel mixer into a sheet by extruding through a 60 mmφ single screw extruder with a vent was made. However, the blowing agent was decomposed and the surface state was not good, and therefore irradiation and foaming were terminated.

Comparative Example 4

A mixture obtained by mixing 20% by weight of a polypropylene-based resin (A) (ethylene-propylene block copolymer:MFR = 1.3 g/10 min, DSC peak temperature: 164°C, Mw = 470,000), 50% by weight of a polypropylene-based resin (B) (ethylene-propylene random copolymer:MFR = 0.8 g/10 min, DSC peak temperature: 148°C, Mw = 1,100,000), 30% by weight of a polyethylene-based resin (C) (linear low density polyethylene:MFR = 12 g/10 min, density: 0.932 g/cm$^3$, Mw = 60,000), 10 parts of azodicarbonamide as a blowing agent and 5 parts of divinylbenzene as an auxiliary crosslinking agent using a Henschel mixer was formed into a 1 mm thick sheet by extruding through a 60 mmφ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 2.4 mm, an apparent density of 60 kg/m$^3$ and a gel fraction of 56%.

With respect to the resulting crosslinked polyolefin resin foam, a tensile elongation at normal temperature was measured and found to be 190%. Also, cells were collapsed by pressing the resulting crosslinked polyolefin resin foam using a mixing roll and an endothermic peak temperature was confirmed by a differential scanning calorimeter and found to be 153°C. Furthermore, a draw ratio was measured and found to be 0.50 or more at a temperature of 160°C, 180°C and 200°C. A tensile elongation at a temperature of 150°C was 240% and a tensile elongation at a temperature of 170°C was 220%. Also, surface roughness Ra75 value was 20 $\mu$m.

Comparative Example 5

A mixture obtained by mixing 25% by weight of a polypropylene-based resin (A) (ethylene-propylene block copolymer:MFR = 1.3 g/10 min, DSC peak temperature: 164°C, Mw = 470,000), 25% by weight of a polypropylene-based resin (B) (ethylene-propylene random copolymer:MFR = 0.8 g/10 min, DSC peak temperature: 148°C, Mw = 1,100,000), 50% by weight of a polyethylene-based resin (C) (linear low density polyethylene:MFR = 12 g/10 min, density: 0.932 g/cm$^3$, Mw = 60,000), 10 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 2.1 mm, an apparent density of 61 kg/m$^3$ and a gel fraction of 54%.

With respect to the resulting crosslinked polyolefin resin foam, a tensile elongation at normal temperature was measured and found to be 210%. Also, cells were collapsed by pressing the resulting crosslinked polyolefin resin foam using a mixing roll and an endothermic peak temperature was confirmed by a differential scanning calorimeter and found to be 154°C. Furthermore, a draw ratio was measured and found to be 0.50 or more at a temperature of 160°C, 180°C and 200°C. A tensile elongation at a temperature of 150°C was 260% and a tensile elongation at a temperature of 170°C was 240%. Also, surface roughness Ra75 value was 19 $\mu$m.

Comparative Example 6

A mixture obtained by mixing 60% by weight of a polypropylene-based resin (A) (ethylene-propylene block copolymer:MFR = 1.3 g/10 min, DSC peak temperature: 164°C, Mw = 470,000), 20% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density palyethylene:MFR = 12 g/10 min, density: 0.932 g/cm$^3$, Mw = 60,000), 9 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 2. 0 mm, an apparent density of 66 kg/m$^3$ and a gel fraction of 54%.

With respect to the resulting crosslinked polyolefin resin foam, a tensile elongation at normal temperature was measured and found to be 150%. Also, cells were collapsed by pressing the resulting crosslinked polyolefin resin foam using a mixing roll and an endothermic peak temperature was confirmed by a differential scanning calorimeter and found to be 158°C. Furthermore, a draw ratio was measured and found to be 0.50 or more at a temperature of 160°C, 180°C and 200°C. A tensile elongation at a temperature of 150°C was 190% and a tensile elongation at a temperature of 170°C was 200%. Also, surface roughness Ra75 value was 17 $\mu$m.

Comparative Example 7

A mixture obtained by mixing 20% by weight of a polypropylene-based resin (A) (ethylene-propylene block copolymer:MFR = 1.3 g/10 min, DSC peak temperature: 164°C, Mw = 470,000), 60% by weight of a polypropylene-based resin (B) (ethylene-propylene random copolymer:MFR = 0.8 g/10 min, DSC peak temperature: 148°C, Mw = 1,100,000), 20% by weight of a polyethylene-based resin (C) (linear low density polyethylene:MFR = 12 g/10 min, density: 0.932 g/cm$^3$, Mw = 60,000), 9 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 2.2 mm, an apparent density of 65 kg/m$^3$ and a gel fraction of 54%.

With respect to the resulting crosslinked polyolefin resin foam, a tensile elongation at normal temperature was measured and found to be 220%. Also, cells were collapsed by pressing the resulting crosslinked polyolefin resin foam using a mixing roll and an endothermic peak temperature was confirmed by a differential scanning calorimeter and found to be 151°C. Furthermore, a draw ratio was measured and found to be 0.50 or more at a temperature of 160°C, 180°C and 200°C. A tensile elongation at a temperature of 150°C was 230% and a tensile elongation at a temperature of 170°C was 200%. Also, surface roughness Ra75 value was 17 $\mu$m.

Comparative Example 8

A trial of forming a mixture obtained by mixing 40% by weight of a polypropylene-based resin (A) (ethylene-propylene block copolymer:MFR = 1. 3 g/10 min, DSC peak temperature: 164°C, Mw = 470, 000), 40% by weight of a polypropylene-based resin (B) (homopropylene:MFR = 0. 9 g/10 min, DSC peak temperature: 167°C, Mw = 560,000) and 20% by weight of a polyethylene-based resin (C) (linear low density polyethylene: MFR = 12 g/10 min, density 0.932 g/cm$^3$, Mw = 60,000), 12 parts of azodicarbonamide as a blowing agent and 5 parts of divinylbenzene as an auxiliary crosslinking agent using a Henschel mixer into a sheet by extruding through a 60 mm$\phi$ single screw extruder with a vent was made. However, the blowing agent was decomposed and the surface state was not good, and therefore irradiation and foaming were terminated.

Comparative Example 9

A mixture obtained by mixing 80% by weight of a polypropylene-based resin (B) (ethylene-propylene random copolymer:MFR = 2.2 g/10 min, DSC peak temperature: 138°C, Mw = 830,000), 50% by weight of a polyethylene-based resin (C) (linear low density polyethylene:MFR = 12 g/10 min, density: 0.932 g/cm$^3$, Mw = 60,000), 10 parts of azodicarbonamide as a blowing agent and 5 parts of divinylbenzene as an auxiliary crosslinking agent using a Henschel mixer was formed into a 1 mm thick sheet by extruding through a 60 mm$\phi$ single screw extruder with a vent.

The sheet thus obtained was irradiated with electron beam of 110 kGy using an electron beam irradiator, thereby crosslinking the resin. The crosslinked sheet was immersed in a salt bath heated to a temperature of 240°C to obtain a crosslinked polyolefin resin foam having a thickness of 2.1 mm, an apparent density of 61 kg/m$^3$ and a gel fraction of 52%.

With respect to the resulting crosslinked polyolefin resin foam, a tensile elongation at normal temperature was measured and found to be 280%. Also, cells were collapsed by pressing the resulting crosslinked polyolefin resin foam using a mixing roll and an endothermic peak temperature was confirmed by a differential scanning calorimeter and found to be 136°C. Furthermore, a draw ratio was measured and found to be 0.50 or more at a temperature of 160°C, 180°C and 200°C. A tensile elongation at a temperature of 150°C was 310% and a tensile elongation at a temperature of 170°C was 220%. Also, surface roughness Ra75 value was 20 $\mu$m.

The results of Comparative Examples 1 to 9 are summarized in Table 2.

Table 2

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Polypropylene-based resin | Amount | Weight % | 60 | 60 | 60 | 20 | 25 | 60 | 20 | 40 | - |
| | MFR | g/10min | 1.3 | 2.2 | 1.3 | 1.3 | 1.3 | 1.3 | 1.3 | 1.3 | - |
| | DSC temperature peak | °C | 164 | 166 | 164 | 164 | 164 | 164 | 164 | 164 | - |
| | Mw | — | 470,000 | 350,000 | 470,000 | 470,000 | 470,000 | 470,000 | 470,000 | 470,000 | - |
| | Kind of resin | | Ethylene-propylene block copolymer | Homopropylene | Ethylene-propylene block copolymer | Ethylene-propylene block copolymer | Ethylene-propylene block copolymer | Ethylene-propylene block copolymer | Ethylene-propylene block copolymer | Ethylene-propylene block copolymer | - |
| Polyolefin resin | Amount | Weight % | - | - | 40 | 50 | 25 | 20 | 60 | 40 | 60 |
| | MFR | g/10min | - | - | 0.8 | 0.8 | 0.8 | 0.8 | 0.8 | 0.9 | 2.2 |
| | DSC temperature peak | °C | - | - | 148 | 148 | 148 | 148 | 148 | 167 | 138 |
| | Mw | — | - | - | 1,100,000 | 1,100,000 | 1,100,000 | 1,100,000 | 1,100,000 | 560,000 | 830,000 |
| | Kind of resin | | - | - | Ethylene-propylene random copolymer | Ethylene-propylene random copolymer | Ethylene-propylene random copolymer | Ethylene-propylene random copolymer | Ethylene-propylene random copolymer | Homopropylene | Ethylene-propylene random copolymer |
| Polyethylene-based resin | Amount | Weight % | 40 | 40 | - | 30 | 50 | 20 | 20 | 20 | 20 |
| | MFR | g/10min | 12 | 12 | - | 12 | 12 | 12 | 12 | 12 | 12 |
| | Density | g/cm³ | 0.932 | 0.932 | - | 0.932 | 0.932 | 0.932 | 0.932 | 0.932 | 0.932 |
| | Mw | — | 60,000 | 60,000 | - | 60,000 | 60,000 | 60,000 | 60,000 | 60,000 | 60,000 |
| | Kind of resin | | Linear low density polyethylene | Linear low density polyethylene | - | Linear low density polyethylene | Linear low density polyethylene | Linear low density polyethylene | Linear low density polyethylene | Linear low density polyethylene | Linear low density polyethylene |
| Physical properties of foam | Apparent density | kg/m³ | 67 | 63 | - | 60 | 61 | 66 | 65 | - | 65 |
| | Gel fraction | % | 56 | 58 | - | 56 | 54 | 54 | 54 | - | 52 |
| | Tensile elongation | % | 160 | 140 | - | 190 | 210 | 150 | 220 | - | 280 |
| | DSC temperature peak | °C | 158 | 161 | - | 153 | 154 | 158 | 150 | - | 136 |
| Evaluation | Formability | | × | · | - | O | O | × | O | - | O |
| | Surface properties | | O | O | · | O | O | O | O | × | O |
| | Heat resistance | | O | O | - | × | · | · | O | · | · |
| | General evaluation | | · | × | · | × | · | · | × | × | · |

Table 2

EP 1 882 715 A1

| | | | Comparative Example | | | | | | | |
|---|---|---|---|---|---|---|---|---|---|---|
| | | | 1 | 2 | 3 | 4 | 5 | 6 | 7 | 8 |
| Polypropylene-based resin | Amount | Weight % | 60 | 60 | 60 | 20 | 25 | 60 | 20 | 40 |
| | MFR | g/10min | 1,3 | 2,2 | 1,3 | 1,3 | 1,3 | 1,3 | 1,3 | 1,3 |
| | DSC temperature peak | °C | 164 | 166 | 164 | 164 | 164 | 164 | 164 | 164 |
| | Mw | — | 470.000 | 350.000 | 470.000 | 470.000 | 470.000 | 470.000 | 470.000 | 470.000 |
| | Kind of resin | | Ethylene-propylene block copolymer | Homopropylene | Ethylene-propylene block copolymer | Ethylene-propylene block copolymer | Ethylene-propylene block copolymer | Ethylene-propylene block copolymer | Ethylene-propylene block copolymer | Ethylene-propylene block copolymer |
| Polyolefin resin | Amount | Weight % | – | – | 40 | 50 | 25 | 20 | 60 | 40 |
| | MFR | g/10min | – | – | 0,8 | 0,8 | 0,8 | 0,8 | 0,8 | 0,9 |
| | DSC temperature peak | °C | – | – | 148 | 148 | 148 | 148 | 148 | 167 |
| | Mw | — | – | – | 1.100.000 | 1.100.000 | 1.100.000 | 1.100.000 | 1.100.000 | 560.000 |
| | Kind of resin | | – | – | Ethylene-propylene random copolymer | Ethylene-propylene random copolymer | Ethylene-propylene random copolymer | Ethylene-propylene random copolymer | Ethylene-propylene random copolymer | Homopropylene |
| Polyethylene-based resin | Amount | Weight % | 40 | 40 | – | 30 | 50 | 20 | 20 | 20 |
| | MFR | g/10min | 12 | 12 | – | 12 | 12 | 12 | 12 | 12 |
| | Density | g/cm³ | 0,932 | 0,932 | – | 0,932 | 0,932 | 0,932 | 0,932 | 0,932 |
| | Mw | — | 60.000 | 60.000 | – | 60.000 | 60.000 | 60.000 | 60.000 | 60.000 |
| | Kind of resin | | Linear low density polyethylene | Linear low density polyethylene | – | Linear low density polyethylene | Linear low density polyethylene | Linear low density polyethylene | Linear low density polyethylene | Linear low density polyethylene |
| Physical properties of foam | Apparent density | kg/m³ | 67 | 63 | – | 60 | 61 | 66 | 65 | – |
| | Gel fraction | % | 56 | 58 | – | 56 | 54 | 54 | 54 | – |
| | Tensile elongation | % | 160 | 140 | – | 190 | 210 | 150 | 220 | – |
| | DSC temperature peak | °C | 158 | 161 | – | 153 | 154 | 158 | 150 | – |
| Evaluation | Formability | | × | × | – | O | O | × | O | – |
| | Surface properties | | O | O | × | O | O | O | O | × |
| | Heat resistance | | O | O | – | × | × | O | × | – |
| | General evaluation | | × | × | × | × | × | × | × | × |

INDUSTRIAL APPLICABILITY

It is expected for the crosslinked polyolefin resin foam obtained in the present invention to exert the effect of decreasing fraction defective by showing excellent heat resistance against heating of processing upon forming, for example, heating of low-pressure injection forming. The crosslinked polyolefin resin foam of the present invention is excellent in flexibility, lightweight properties and heat insulating properties, and is preferably used as an automobile interior material such as a ceiling, a door and an instrument panel.

**Claims**

1.  A crosslinked polyolefin resin foam comprising a polyolefin resin composition containing 20 to 50% by weight of a polypropylene-based resin (A) which shows at least one endothermic peak measured by differential scanning calorimeter at a temperature of 160°C or higher, 20 to 50% by weight of a polypropylene-based resin (B) which shows an endothermic peak measured by differential scanning calorimeter at a temperature of lower than 160°C, and 20 to 40% by weight of a polyethylene-based resin (c).

2.  The crosslinked polyolefin resin foam according to claim 1, wherein the polypropylene-based resin (A) is an ethylene-propylene block copolymer.

3.  The crosslinked polyolefin resin foam according to claim 1, wherein the polypropylene-based resin (A) is a homopolypropylene.

4.  The crosslinked polyolefin resin foam according to claim 1, wherein the polypropylene-based resin (A) is an ethylene-propylene random copolymer.

5.  The crosslinked polyolefin resin foam according to claim 1, wherein a melt flow rate of the polypropylene-based resin (A) is from 0.4 to 1.8 g/10 min and a weight ratio of the polypropylene-based resin (A) to the polypropylene-based resin (B) is from 1:0.5 to 1:1.5.

6.  A laminate comprising the crosslinked polyolefin resin foam according to claim 1 and other material, which are laminated to each other.

7.  A formed article obtained by forming the crosslinked polyolefin resin foam according to claim 1 or the laminate according to claim 6.

8.  An automobile interior material using any one of the crosslinked polyolefin resin foam according to claim 1, the laminate according to claim 6 and the formed article according to claim 7.

Fig. 1

| | | Melt flow rate (MFR), Unit: g/10 min | | |
|---|---|---|---|---|
| | | 0.4 | 1.8 | |
| Polypropylene-based resin (A) : Polypropylene-based resin (B) | 1:0.5 | | | |
| | 1:1.5 | | | |

There may arise reduction of elongation.

There may arise deterioration of appearance.

There may arise deterioration of heat resistance.

## INTERNATIONAL SEARCH REPORT

| International application No. |
| --- |
| PCT/JP2006/309472 |

**A. CLASSIFICATION OF SUBJECT MATTER**
*C08J9/04*(2006.01), *B32B27/32*(2006.01), *C08L23/10*(2006.01), *C08L23/04* (2006.01)

According to International Patent Classification (IPC) or to both national classification and IPC

**B. FIELDS SEARCHED**

Minimum documentation searched (classification system followed by classification symbols)
B32B27/32, C08J9/04-9/14

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 5-214144 A (Sekisui Chemical Co., Ltd.), 24 August, 1993 (24.08.93), Full text (Family: none) | 1-8 |
| A | JP 5-214143 A (Sekisui Chemical Co., Ltd.), 24 August, 1993 (24.08.93), Claims (Family: none) | 1-8 |
| A | JP 2003-105117 A (Sekisui Chemical Co., Ltd.), 09 April, 2003 (09.04.03), Claims (Family: none) | 1-8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 13 July, 2006 (13.07.06) | Date of mailing of the international search report 25 July, 2006 (25.07.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/309472 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 8-59872 A (Sekisui Chemical Co., Ltd.), 05 March, 1996 (05.03.96), Claims (Family: none) | 1-8 |
| A | JP 2004-27119 A (Sekisui Chemical Co., Ltd.), 29 January, 2004 (29.01.04), Claims; Par. Nos. [0007] to [0022]; example 1 (Family: none) | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3308724 B